# EUROPÄISCHE PATENTSCHRIFT

(11) **EP 1 392 888 B1**
(45) Veröffentlichungstag und Bekanntmachung des Hinweises auf die Patenterteilung: **30.11.2005**
(21) Anmeldenummer: 02774024.0
(22) Anmeldetag: 24.05.2002
(51) Int. Cl.: C23F 1/36, C23F 1/44, C01F 7/06, C23G 1/14

(54) **VERFAHREN ZUM BETRIEB EINES ALUMINIUM-BEIZBADES**
METHOD FOR OPERATING AN ALUMINIUM PICKLING BATH
PROCEDE D'UTILISATION D'UN BAIN DE DECAPAGE D'ALUMINIUM

(30) Priorität: 28.05.2001 DE 10125933
(43) Veröffentlichungstag der Anmeldung: 03.03.2004
(73) Patentinhaber: Weber, Heiko, 74889 Sinsheim (DE)
(72) Erfinder: Weber, Heiko, 74889 Sinsheim (DE)
(74) Vertreter: Lauer, Joachim
(86) Internationale Anmeldenummer: PCT/EP2002/005721
(87) Internationale Veröffentlichungsnummer: WO 2002/097163

(56) Entgegenhaltungen:
- US-A- 4 265 863
- US-A- 5 091 046
- DATABASE WPI Section Ch, Week 199809 Derwent Publications Ltd., London, GB; Class M12, AN 1998-094995 XP002209734 & JP 09 323163 A (SINTOKOGIO LTD), 16. Dezember 1997 (1997-12-16)
- RAYZMAN V ET AL: "SODIUM ALUMINATE FROM ALUMINA-BEARING INTERMEDIATES AND WASTES" JOM, MINERALS, METALS AND MATERIALS SOCIETY, WARRENDALE, US, Bd. 50, Nr. 11, 1. November 1998 (1998-11-01), Seiten 32-37, XP000786960 ISSN: 1047-4838

## Beschreibung

### TECHNISCHES GEBIET

Die vorliegende Erfindung betrifft ein Verfahren zum Betrieb eines Beizbades auf der Basis von Natronlauge unter erhöhter Temperatur insbesondere zur Reinigung von Werkzeugen in Aluminiumwerken, bei welchem sich die Beize unter Verbrauch von Natronlauge mit Aluminium anreichert und nach einer gewissen Standzeit erneuert wird.

Bei den Werkzeugen kann es sich z.B. um Stranggusswerkzeuge für die Herstellung von Aluminiumprofilen handeln, in welchen nach ihrem Gebrauch ein Aluminiumpfropf zurückgeblieben ist. Damit das Werkzeug wieder verwendet werden kann, muss dieser Propf herausgebeizt werden.

### STAND DER TECHNIK

In Aluminiumwerken sind zu diesem Zweck meist Beizbäder vorhanden, die mehr oder weniger ständig mit Werkzeugen aber auch anderen Teilen belegt sind. Indem durch den Beizprozess einerseits die in der Beizflüssigkeit enthaltene Natronlauge verbraucht wird, die Beizflüssigkeit sich andererseits mit Aluminium anreichert und durch den sich bildenden Natriumaluminat-Komplex auch viskoser wird, verläuft der Beizvorgang mit der Zeit weniger wirksam, so dass die Beizflüssigkeit von Zeit zu Zeit erneuert werden muss. Mit zunehmend steigender Aluminiumkonzentration fällt aus der Beizflüssigkeit auch Aluminiumhydroxid aus, das einen schlammartigen Bodensatz in der Beizwanne bildet.

Üblicherweise wird die Beize aus betriebstechnischen Gründen in einem festen Rhythmus, insbesondere täglich, erneuert. Dabei wird die Beizffüssigkeit z.B. bereits nach ca. 18 Stunden verworfen und aus der Beizwanne abgelassen oder abgepumpt. Zu diesem Zeitpunkt hat die Beizgeschwindigkeit bereits stark abgenommen.und auch die erwähnte Schlammbildung kann bereits eingesetzt haben. Die verbleibenden 6 Stunden werden benötigt, die Beizwanne von dem Schlamm zu reinigen, mit frisch aus Wasser und Natronlauge angesetzter Beize zu befüllen und diese wieder "auf Temperatur" zu bringen. Damit die abzubeizenden Teile in möglichst nur einem Durchgang in den effektiv nur 18 Stunden Beizzeit fertig gebeizt werden können, nutzt man die hohen Beizgeschwindigkeiten, solange die Beize noch frisch ist und arbeitet mit relativ hohen Natronlaugekonzentrationen von z.B. 400 g/l sowie zumindest mit einer Anfangstemperatur von z.B. 85°C, die in der Regel über die gesamte Betriebszeit aber nicht aufrechterhalten wird.

Die verbrauchte Beize wird als Abfall entsorgt, wobei Entsorgungskosten anfallen. Gewisse Firmen haben sich dabei darauf spezialisiert, die verbrauchte Beize gegen Entgelt bei den Aluminiumwerken abzuholen und daraus eine z.B. in kommunalen Kläranlagen als Phosphatfällungsmittel einsetzbare Natriumaluminatlösung herzustellen. Hierzu muss jedoch die Aluminiumkonzentration in der Regel noch erhöht und die Konzentration an Natronlauge abgesenkt werden. Auch lässt man die zunächst schwärzliche Flüssigkeit noch über einige Monate absitzen, um ein klares Produkt zu erhalten. Der aus der Beize ausgefallene Schlamm muss durch die Aluminiumwerke ebenfalls entsorgt werden. Gewöhnlich wird er deponiert, was mit weiteren Entsorgungskosten verbunden ist. Zusammen stellen diese Entsorgungskosten einen erheblichen Kostenfaktor dar.

### DARSTELLUNG DER ERFINDUNG

Aufgabe der Erfindung ist es anzugeben, wie das eingangs beschriebene Beizverfahren wirtschaftlicher betrieben werden kann.

Erfindungsgemäss lässt sich dies dadurch erreichen, dass die Zusammensetzung der erneuerten Beize und die Standzeit der Beize so gewählt werden, dass als Produkt des Verfahrens eine Natriumaluminatlösung entsteht, die in einem Klärwerk zur Phosphatfällung, einsetzbar ist.

Der durch die Erfindung erzielbare Vorteil ist gleich zweifach: Die beim Stand der Technik anfallenden Entsorgungskosten werden eingespart und es können für das hergestellte Produkt stattdessen Verkaufserlöse erzielt werden.

Die Natriumaluminatlösung, wie sie Ergebnis der erfindungsgemässen Prozessführung ist, weist insbesondere einen Aluminiumgehalt zwischen 80 g/l und 140 g/l, bevorzugt zwischen 90 g/ und 110 g/l, und einen etwa 2.0 - 3.5 mal höheren Gehalt an Natronlauge auf. Ist der Gehalt an Natronlauge zu niedrig, ist die Natriumaluminatlösung nicht ausreichend stabil, zumindest nicht langzeitstabil, weil Aluminiumhydroxid ausfällt. Langzeitstabilität bedeutet hier eine Stabilität über mindestens 12 Monate. Ist der Gehalt an Natronlauge zu hoch, besteht die Gefahr, dass die Natronlauge bei abnehmenden Temperaturen auskristallisiert. Das Produkt sollte zumindest bei Temperaturen bis -25°C gelagert und eingesetzt werden können.

Bei der erfindungsgemässen Prozessführung ist es notwendig, gegenüber dem oben erläuterten Stand der Technik, die Beize mit Aluminium stärker aufkonzentrieren zu lassen. Damit begibt man sich grundsätzlich in einen Bereich vergleichsweise niedrigerer Beizgeschwindigkeiten, in welchem auch die Visoksität der Beize hoch ist und zunehmend Schlammbildung auftritt. Durch geeignete Hilfsmassnahmen, lassen sich diese unerwünschten Effekte jedoch zumindest begrenzen.

So kann bereits durch Einstellen und Halten einer etwas höheren Temperatur, beispielsweise von 90°C oder gar von 95°C, anstelle von nur 85°C, die Beizgeschwindigkeit erhöht, die Viskosität erniedrigt und die Schlammbildung behindert werden.

Viskosität und Schlammbildung können auch günstig dadurch beeinflusst werden, dass die Verdampfungsverluste der heissen Beize über die Standzeit hinweg immer wieder zumindest teilweise ausgeglichen werden. Das Ausgleichen der Verdampfungsverluste erfolgt hierbei mit Vorteil durch das sowieso erforderliche Spülen von aus dem Beizbad entnommenen, abgebeizten Teilen mit Wasser über der Beizwanne, so dass das Spülwasser in die Beizwanne abfliessen bzw. abtropfen kann.

Der Schlammbildung kann durch Zugabe eines Zusatzstoffes (Additiv) gegen die Bildung von solchem Schlamm, insbesondere durch Zugabe von Zuckerrübermelasse oder Sorbit, gezielt entgegengewirkt werden.

Eine besondere Erkenntnis der Erfindung liegt auch darin, dass es gar nicht nötig ist, durch Einsatz einer gänzlich aus Natronlauge und Wasser frisch angesetzen Beize die anfänglichen hohen Beizgeschwindigkeiten auszunutzen, sondern dass das Verfahren mit einer bereits einen gewissen Aluminiumanteil enthaltenden Beize als Startbeize ebenfalls rationell ausführbar ist. Es wird dann nämlich zum einen die Zeit eingespart, die eine gänzlich frische Beize ohne jegliches Aluminium benötigt, bis sie einen gewissen Aluminiumgehalt aufgebaut und dadurch ihre volle Wirksamkeit erreicht hat; zum anderen kann hierbei von dem erfindungsgemäss hergestellten, noch heissen Produkt beim Erneuern der Beize einfach ein gewisser Anteil von beispielsweise 30% - 50% wieder eingesetzt werden, wodurch eine nicht unerhebliche Menge an Wärmeenergie eingespart und die Aufheizzeit auf die erwähnte Prozesstemperatur erheblich verkürzt wird. Die eingesparten Zeiten kompensieren zumindest teilweise die geringere Beizgeschwindigkeit.

Wird auch noch von den anderen bereits genannten Massnahmen Gebrauch gemacht, insbesondere von dem Zusatz eines Mittels gegen Schlammbildung, dann kann auch noch die Zeit, die bei der Prozessführung nach dem Stand der Technik für das Putzen der Beizwanne benötigt wird, eingespart werden. Im Ergebnis kann das Verfahren nach der Erfindung so gefahren werden, dass trotz geringerer Beizgeschwindigkeit ein 24-Stunden-Zyklus einhaltbar ist.

### KURZE ERLÄUTERUNG DER FIGUREN

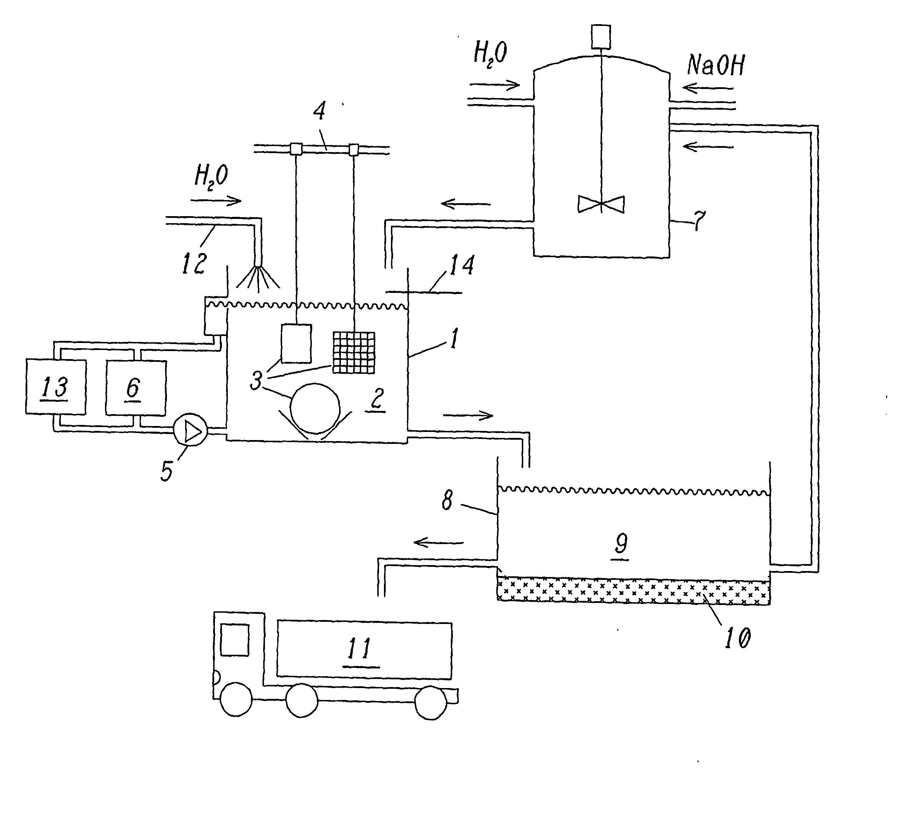

Die Erfindung soll nachfolgend anhand von Ausführungsbeispielen im Zusammenhang mit der Zeichnung näher erläutert werden. Die Zeichnung zeigt lediglich schematisch den Aufbau einer im Rahmen der Erfindung verwendbaren Beizanlage.

### WEGE ZUR AUSFÜHRUNG DER ERFINDUNG

In der Zeichnung bezeichnet 1 eine mit Beize 2 gefüllte Beizwanne von z.B. 3.5 m³ Fassungsvermögen. In der Beizwanne 1 sind auch einige abzubeizende Gegenstände abgebildet, die einfach am Boden der Beizwanne abgelegt, in die Beizwanne von einem Gestell 4 aus eingehängt oder in einem ebenfalls an dem Gestell 4 aufgehängten Warenkorb enthalten sind. Mittels einer Pumpe 5 wird die Beize über einen Wärmetauscher 6 umgewälzt. Der Wärmetauscher 6 ist durch Anschluss an Heissdampf sowohl zum Heizen als auch durch Anschluss an Kühlwasser zum Kühlen der Beize 2 ausgebildet.

Befüllt werden kann die Beizwanne 1 mit frischer Beize 2 oder einer Mischung aus Natronlauge und Wasser aus einem mit einem Rührwerk versehenen Mischtank 7. Andererseits kann die Beize 2 oder ein Teil davon aus der Beizwanne 1 in einen Absetztank 8 überführt werden, in welchem sie sich mit der Zeit in eine klare 9 und eine trübe Fraktion 10 separiert. Die klare Fraktion 9 kann als Produkt direkt einer Verwertung z.B als Phosphatfällungsmittel in einer Kläranlage zugeführt und dazu z.B von einem Tankfahrzeug 11 abgeholt werden. Die trübe Fraktion kann anderweitig verwendet werden.

Mit 12 ist noch eine über der Beizwanne 1 endende Leitung für Spülwasser bezeichnet. Mit dem Spülwasser können die abgebeizten Gegenstände 3 bei ihrer Entnahme aus dem Beizbad abgespült werden und von noch anhängender Beize 2 gereinigt werden, wobei das Spülwasser in der Beizwanne 1 aufgefangen wird.

Im folgenden wird ein Beispiel für den Betrieb der erläuterten Beizanlage gemäss der Erfindung gegeben:

Bei zunächst noch leerer Beizwanne 1 wird in dem Mischtank 7 eine Anfangsbeize hergestellt und zwar aus einer Mischung von früher hergestelltem, aluminiumhaltigem Produkt, frischer Natronlauge (NaOH) sowie aus Wasser (H₂O). Die Mischung wird so ausgeführt, dass die Anfangsbeize ca. 45 g/l Aluminium und ca. 300 g/l Natronlauge enthält. Der Rest ist Wasser. Die so hergestellte Anfangsbeize wird dann in die Beizwanne 1 überführt. Dort wird sie durch Umpumpen über den Wärmetauscher 6 von Raumtemperatur in etwa zwei Stunden auf ca. 90°C aufgeheizt. In der Beizwanne 1 wird die Beize auch noch mit einem Beizzusatz versehen, der die Bildung von Aluminumhydroxid-Schlamm verhindert. Es kann sich hierbei um einen an sich bekannten Zuckerzusatz handeln, inbesondere um Zuckermelasse oder Sorbit. Für das erwähnte Volumen von 3.5 m³ genügen bereits etwa 2 Liter von diesem Zusatz.

Sobald die erwähnte Temperatur von 90°C erreicht ist (oder auch schon früher) können die abzubeizenden Gegenstände 3 in die Beizwanne eingebracht werden, womit dann der Beizvorgang beginnt.

Der Beizvorgang ist exotherm, so dass zusätzliche Wärme entsteht und die Temperatur der Beize weiter zu steigen beginnt. Durch Ausschalten der Wärmezufuhr am Wärmetauscher bzw. durch aktive Kühlung über den Wärmetauscher wird der Temperaturanstieg aber begrenzt und die Temperatur in einem Bereich um 95°C, beispielsweise zwischen 90°C und 100° gehalten.

Beim Beizvorgang entsteht auch Wasserstoff an den abzubeizenden Gegenständen. Durch die Bewegung der Beize durch das Umpumpen wird dieser entfernt und der Beizangriff verbessert. Die entstehenden Dämpfe und/oder eine Schaumbildung werden durch eine Randabsaugung 14 mit integriertem Luftwäscher beseitigt. An den abzubeizenden Gegenständen anhaftende Öle oder Schmiermittel werden durch einen in die Anlage integrierten Ölabscheider 13 beseitigt.

Mit der Zeit reichert sich die Beize 2 mit Aluminium in Form eines Natriumaluminat-Komplexes an, wohingegen die verfügbare Menge an Natronlauge abnimmt. Dabei steigt auch die Viskosität der Beizflüssigkeit. Der Viskositätsanstieg wird durch das Ersetzten der Verdampfungsverluste der heissen Beize durch Zufuhr von Wasser begrenzt. Die Verdampfungsverluste können pro Tag bis zu 25% betragen. Die Wasserzufuhr kann über die Spülwasserleitung 12 und zumindest teilweise im Zusammenhang mit dem Abspülen vorzeitig aus dem Beizbad entnommener Gegenstände erfolgen.

Der Beizprozess wird auf die beschriebene Art aber aufrecht erhalten, bis die Aluminiumkonzentration in der Beize 2 auf einen Wert zwischen 80 g/l und 140 g/l, inbesondere von 90 g/l, angestiegen und die freie Natronlaugekonzentration auf einen Wert zwischen 180 g/l und 190 g/l abgesunken ist. Es sind dies die Werte, wie sie für eine stabile Natriumaluminatlösung gefordert werden, die in Klärwerken als Phosphatfällungsmittel einsetzbar ist. Bei Erreichen dieser Werte wird die Beizflüssigkeit 2 aus der Beizwanne abgezogen in den Absetztank 8, allerdings nur zu einem Teil von etwa 50% - 70%.

Aus dem in der Beizwanne verbleibenden Rest von etwa 30% - 50% wird unter Zugabe eines nunmehr reinen Natronlauge-Wasser-Gemischs aus dem Mischtank 7 eine neue Beize hergestellt, die bezüglich ihrer Werte wieder gleich eingestellt wird, wie die erwähnte Anfangsbeize, d.h. auf einen Aluminiumgehalt von ca. 45 g/l und einen Natronlaugegehalt von ca. 300 g/l. Auch der erwähnte Beizzusatz wird wieder beigegeben, wobei jetzt jedoch ca. 1.0 -1.5 l genügen. Sodann wird die Umwälzung über den Wärmetauscher wieder in Gang gesetzt und mit der Aufheizung der Beize auf 90°C begonnen.

Indem ein Teil der heissen Beize für die Zubereitung der neuen Beize verwendet wird und die Beizwanne ebenfalls noch heiss ist,geht das Wiederaufheizen auf 90°C schneller als das Aufheizen der kalten Anfangsbeize am Anfang. Die Aufheizzeit kann weiter dadurch reduziert werden, dass das Natronlauge-Wasser-Gemisch im Mischtank 7 z.B. eine Stunde früher als benötigt hergestelt wird, da bei dieser Mischung Wärme entsteht. Der Effekt ist so stark, dass das Natronlauge-Wasser-Gemisch ohne weiteres 50°C erreicht. Die verbleibende Auffheizeit kann auf diese Weise insgesamt auf etwa nur eine halbe Stunde reduziert werden.

Während der Erneuerung der Beize 2 können die abzubeizenden Gegenstände 3 in der Beizwanne 1 belassen werden. Ein Zeitverlust durch Herausnehmen und Wiedereinsetzen der Gegenstände wird vermieden. Eine Reinigung der Beizwanne 1 ist ebenfalls nicht erforderlich. Insbesondere muss kein Aluminumhydroxid-Niederschlag enfernt werden, da dieser durch den Beizzusatz wirksam verhindert wird.

Das vorbeschriebene Verfahren kann nun in regelmässigen Zyklen wie beschrieben weitergeführt werden, wobei beim Erneuern der Beize immer ein Teil der verbrauchten Beize in der Beizwanne belassen wird. Trotz der hohen Aluminium- und niedrigen Natronlaugewerte, bis zu welchen die Beize jeweils ausgenutzt wird, und der damit verbundenen relativ niedrigen Beizgeschwindigkeit gegen Ende jedes Zyklus, können wegen dem erwähnten Zeitgewinn dennoch 24-Stunden-Zyklen eingehalten werden.

Wie bereits mehrfach erwähnt, erfüllt die aus der Beizwanne 1 abgezogene und in den Absetztank überführte Beize 2 von ihrer Zusammensetzung her bereits die Anforderungen, wie sie an eine als Phosphatfällungsmittel verwendbare Natriumaluminatlösung gestellt werden. Sie ist lediglich noch schwarz gefärbt. Da von Klärwerken ein klares Produkt bevorzugt wird, lässt man die schwarze Flüssigkeit über einen Zeitraum von typisch 2 - 3 Wochen ruhen, wobei sie sich in die erwähnte klare Fraktion 9 und die trübe Fraktion 10 separiert. Ggf. können auch mehrere Absetztanks 8 parallel eingesetzt werden und/oder kann das erzeugte Produkt, d.h. die klare Fraktion 9 in einem weiteren Tank vor der Abholung noch zwischengelagert werden.

### BEZEICHNUNGSLISTE

- 1: Beizwanne
- 2: Beize
- 3: abzubeizende Gegenstände
- 4: Gestell
- 5: Pumpe
- 6: Wärmetauscher
- 7: Mischtank
- 8: Absetztank
- 9: klare Fraktion
- 10: trübe Fraktion
- 11: Tankfahrzeug
- 12: Spülwasserleitung
- 13: Ölabscheider
- 14: Randabsaugung

## Patentansprüche

1. Verfahren zum Betrieb eines Beizbades auf der Basis von Natronlauge unter erhöhter Temperatur insbesondere zur Reinigung von Werkzeugen in Aluminiumwerken, bei welchem sich die Beize unter Verbrauch von Natronlauge mit Aluminium anreichert und nach einer gewissen Standzeit erneuert wird, **dadurch gekennzeichnet, dass** die Zusammensetzung der erneuerten Beize und die Standzeit der Beize so gewählt werden, dass als Produkt des Verfahrens eine Natriumaluminatlösung entsteht, die in einem Klärwerk zur Phosphatfällung einsetzbar ist.

2. Verfahren nach Anspruch 1, **dadurch gekennzeichnet, dass** die Zusamensetzung der erneuerten Beize und die Standzeit der Beize so gewählt werden, dass als Produkt eine Natriumaluminatlösung mit einem Aluminiumgehalt zwischen 80g/l und 140 g/l, insbesondere zwischen 90 g/ und 110 g/l, entsteht.

3. Verfahren nach Anspruch 1 oder 2, **dadurch gekennzeichnet, dass** in der erneuerten Beize gerade soviel Natronlauge eingesetzt wird, dass als Produkt des Verfahrens eine Natriumaluminatlösung entsteht, welche von ihrem Gehalt an Natronlauge her ausreichend langzeit- und kältestabil ist, wobei der Gehalt an Natronlauge vorzugsweise etwa 2.5. - 3.5 mal höher als der der Gehalt an Aluminium ist.

4. Verfahren nach einem der Ansprüche 1 - 3, **dadurch gekennzeichnet, dass** der Anstieg der Viskosität der Beize, insbesondere durch einen wenigstens teilweisen Ausgleich der Verdampfungsverluste der Beize, begrenzt wird.

5. Verfahren nach Anspruch 4, **dadurch gekennzeichnet, dass** die Verdampfungsverluste wenigstens teilweise durch Spülen von aus dem Beizbad entnommenen, abgebeizten Teilen mit Wasser ausgeglichen werden.

6. Verfahren nach einem der Ansprüche 1 - 5, **dadurch gekennzeichnet, dass** die Entstehung von Aluminium-Hydroxid-Schlamm durch Zugabe eines Zusatzstoffes gegen die Bildung von solchem Schlamm, insbesondere durch Zugabe von Zuckerrübermelasse oder Sorbit, verhindert wird.

7. Verfahren nach einem der Ansprüche 1 - 6, **dadurch gekennzeichnet, dass** die Temperatur auf einem Wert zwischen 85°C und 95°C, insbesondere jedoch auf 90°C gehalten wird.

8. Verfahren nach einem der Ansprüche 1 - 7, **dadurch gekennzeichnet, dass** die frische Beize bereits einen gewissen Anteil an Aluminium, vorzugsweise zwischen 40g/l und 50 g/l, enthält.

9. Verfahren nach Anspruch 8, **dadurch gekennzeichnet, dass** die frische Beize aus einer zuvor hergestellten Natriumaluminatlösung unter Zugabe von Wasser und Natronlauge hergestellt wird.

10. Verfahren nach einem der Ansprüche 8 oder 9, **dadurch gekennzeichnet, dass** von der hergestellten Natriumaluminatlösung als Produkt aus dem Beizbad lediglich ein Teil, vorzugsweise zwischen 50%- 70%, entnommen und der restliche Teil zur Herstellung von frischer Beize verwendet und in dem Beizbad zu diesem Zweck gerade belassen wird.

11. Verfahren nach einem der Ansprüche 1 - 10, **dadurch gekennzeichnet, dass** es in einem bestimmten Rhythmus, inbesondere in einem 24-Stunden Rhythmus, gefahren wird.

## Claims

1. A method for operating a pickling bath based on caustic soda at elevated temperature particularly for cleaning tools in aluminium plants, in which the pickling liquor is enriched with aluminium by using caustic soda and is replaced after a given period, **characterised in that** the composition of the renewed pickling liquor and the residence time of the pickling liquor is selected such that the product of the method is a sodium aluminate solution, which may be used in treatment works for precipitation of phosphates.

2. The method as claimed in Claim 1, **characterised in that** the composition of the renewed pickling liquor and the residence time of the pickling liquor are selected such that the product of the method is a sodium aluminate solution with an aluminium contents between 80g/l and 140g/l, particularly between 90 g/l and 110g/l.

3. The method as claimed in Claim 1 or 2, **characterised in that** in the renewed pickling liquor as much caustic soda is used as the product of the method is a sodium aluminate solution, which from its caustic soda contents is sufficiently long-term stable and cold-stable, whereby the contents of caustic soda are preferably approximately 2.5 to 3.5 times higher than that of the contents of aluminium.

4. The method as claimed in any one of Claims 1 to 3, **characterised in that** the increase in viscosity of the pickling liquor is limited particularly by at least partial balancing of the evaporation losses of the pickling liquor.

5. The method as claimed in Claim 4, **characterised in that** the evaporation losses is compensated at least partially by rinsing with water of pickled parts removed from the pickling bath.

6. The method as claimed in any one of Claims 1 to 5, **characterised in that** the occurrence of aluminium-hydroxide sludge is prevented by adding an additive acting against the development of such sludge, particularly by adding sugar beet molasses or sorbite.

7. The method as claimed in any one of Claims 1-6, **characterised in that** the temperature is kept at a value between 85 °C and 95 °C, though particularly at 90 °C.

8. The method as claimed in any one of Claims 1 to 7, **characterised in that** the fresh pickling liquor already contains a certain proportion of aluminium, preferably between 40g/i and 50 g/l.

9. The method as claimed in Claim 8, **characterised in that** the fresh pickling liquor is made from a previously manufactured sodium aluminate solution with addition of water and caustic soda.

10. The method as claimed in any one of Claims 8 or 9, **characterised in that** of the manufactured sodium aluminate solution only a portion is removed as product from the pickling bath, preferably between 50 %-70 %, and the remaining portion is used to make fresh pickling liquor and is left in the pickling bath for this very purpose.

11. The method as claimed in any one of Claims 1 to 10, **characterised in that** it is carried out in a specific rhythm, particularly in a 24-hour rhythm.

## Revendications

1. Procédé pour l'utilisation d'un bain de décapage sur la base de lessive de soude à haute température, notamment pour le nettoyage d'outils dans les usines d'aluminium, lors duquel le produit décapant s'enrichit en aluminium par la consommation de lessive de soude et est remplacé après une certaine durée de vie, **caractérisé en ce que** la composition de l'agent décapant renouvelé et la durée de vie de l'agent décapant sont sélectionnées de telle sorte que le procédé produise une solution d'aluminate de sodium qui pourra être utilisée dans une station d'épuration pour la précipitation des phosphates.

2. Procédé selon la revendication 1, **caractérisé en ce que** la composition de l'agent décapant renouvelé et la durée de vie de l'agent décapant sont sélectionnées de telle sorte que le procédé produise une solution d'aluminate de sodium avec une teneur en aluminium entre 80 g/l et 140 g/l, notamment entre 90 g/l et 110g/l.

3. Procédé selon la revendication 1 ou 2, **caractérisé en ce que**, dans l'agent décapant renouvelé, il est utilisé juste la quantité de lessive de soude nécessaire pour que le procédé produise une solution d'aluminate de sodium dont la teneur en lessive de soude assurera une stabilité à long terme et au froid suffisante, la teneur en lessive de soude étant de préférence environ 2,5 à 3,5 fois supérieure à la teneur en aluminium.

4. Procédé selon l'une des revendications 1 à 3, **caractérisé en ce que** l'augmentation de la viscosité de l'agent décapant est limitée, notamment par le biais d'une compensation au moins partielle des pertes par évaporation de l'agent décapant.

5. Procédé selon la revendication 4, **caractérisé en ce que** les pertes par évaporation sont compensées au moins en partie par le rinçage à l'eau de pièces décapées retirées du bain de décapage.

6. Procédé selon l'une des revendications 1 à 5, **caractérisé en ce que** la formation de boues d'hydroxyde d'aluminium est empêchée par l'ajout d'un additif s'opposant à la formation de telles boues, notamment par l'ajout de mélasse de betteraves sucrières ou de sorbitol.

7. Procédé selon l'une des revendications 1 à 6,
**caractérisé en ce que** la température est maintenue à une valeur entre 85 °C et 95 °C, notamment à 90 °C.

8. Procédé selon l'une des revendications 1 à 7, **caractérisé en ce que** l'agent décapant frais contient déjà une certaine teneur en aluminium, de préférence entre 40 g/l et 50 g/l.

9. Procédé selon la revendication 8, **caractérisé en ce que** l'agent décapant frais est réalisé à partir d'une solution d'aluminate de sodium produite auparavant, avec ajout d'eau et de lessive de soude.

10. Procédé selon la revendication 8 ou 9, **caractérisé en ce que** juste une partie, de préférence entre 50 % et 70 %, de la solution d'aluminate de sodium produite par le bain de décapage est prélevée, et **en ce que** la partie restante est utilisée pour la fabrication d'agent décapant frais et reste dans le bain de décapage dans ce but.

11. Procédé selon l'une des revendications 1 à 10, **caractérisé en ce que** l'exploitation s'effectue suivant un certain rythme, notamment un rythme de 24 heures.
